# EUROPEAN PATENT SPECIFICATION

(11) **EP 3 347 444 B1**
(45) Date of publication and mention of the grant of the patent: **29.09.2021**
(21) Application number: 16760726.6
(22) Date of filing: 06.09.2016
(51) Int. Cl.: A23D 9/00, A23G 1/36, C11C 3/10, C11C 1/08, A21D 13/80, C11B 7/00, A21D 13/00

(54) **FAT COMPOSITIONS**
FETTZUSAMMENSETZUNGEN
COMPOSITIONS DE GRAISSE

(30) Priority: 07.09.2015 WO PCT/EP2015/070330
(43) Date of publication of application: 18.07.2018
(73) Proprietor: Fuji Oil Europe, 9042 Gent (BE)
(72) Inventor: CLEENEWERCK, Bernard, 8301 Knokke-Heist (BE); ECHIM, Camelia, 9940 Doornzele (Evergem) (BE); VERBEECK, Sabrina, 9130 Kieldrecht (BE); VANDERLINDEN, Bart, 9800 Deinze (BE)
(74) Representative: Gevers Patents
(86) International application number: PCT/EP2016/070939
(87) International publication number: WO 2017/042149

(56) References cited:
- WO-A1-2011/161213
- WO-A1-2014/016245
- US-A1- 2015 093 492
- CHONG C N ET AL: "FRACTIONATION PROCEDURES FOR OBTAINING COCOA BUTTER-LIKE FAT FROM ENZYMATICALLY INTERESTERIFIED PALM OLEIN", JOURNAL OF THE AMERICAN OIL CHEMISTS' SOCIETY (JAOCS), SPRINGER, DE, vol. 69, no. 2, 1 February 1992 (1992-02-01), pages 137-140, XP000261553, ISSN: 0003-021X, DOI: 10.1007/BF02540563
- SAW MEI HUEY, ET AL.: "Characterization of low saturation palm oil products after continuous enzymatic interesterification and dry fractionation", JOURNAL OF FOOD SCIENCE., vol. 74, no. 4, 2009, pages E177-E183, XP002757600, USINSTITUTE OF FOOD TECHNOLOGISTS. CHICAGO. ISSN: 0022-1147
- SIEW WAI LIN ET AL: "High Oleic Enhancement of Palm Olein via Enzymatic Interesterification", JOURNAL OF OLEO SCIENCE, vol. 58, no. 11, 1 January 2009 (2009-01-01), pages 549-555, XP055031835, ISSN: 1345-8957, DOI: 10.5650/jos.58.549

## Description

### Field of invention

The present invention relates to fat compositions suitable for use in confectionery applications, in particular confectionery creams or fillings comprising glyceride compositions, in particular triglyceride compositions containing a substantial amount of asymmetrical triglycerides and a reduced level of saturated fatty acids (SAFA), with improved crystallisation properties and an improved taste sensation. The present invention also relates to processes for the production of said fat compositions and to the use of the fat compositions for the manufacturing of confectionery products, in particular confectionery creams or fillings.

### Background of the invention

The use of interesterified fats is quite well known in confectionery applications. In this respect, different types and combinations of interesterified fats are used for different purposes.

A first category of interesterified fats are combinations of lauric and non-lauric fats that are randomised through chemical or enzymatic interesterification. Said interesterified fats are particularly used, for instance, in filled pralines or in chocolate bars, with the aim to prevent blooming of the chocolate shell. However, the fact that lauric fats may develop a so-called soapy flavour is considered as a drawback of this kind of fats.

A second category of interesterified fats are non-lauric interesterified products, mainly based on palm oil or shea butter or fractions thereof. Said second category of interesterified fats can also be used to reduce blooming, but they are especially known for their use in applications where no tempering should be applied. For example, palm oil characterized by its high content of symmetrical triglycerides needs to be stabilised in the β-crystai form in order to avoid recrystallisation upon storage. This stabilisation is done in the so called tempering process, which is a standard production step in the manufacturing of chocolate. Said additional tempering process leads to additional complication and cost. Upon interesterification of palm oil, the majority of triglycerides in the resulting interesterified palm products are asymmetrical and an additional tempering process is no longer required.

A major disadvantage of said randomized chemical or enzymatic interesterification process is that the interesterified fats obtained thereof are characterized by having a very wide variety of triglycerides. Specifically, a wide variety of triglycerides going from fat molecules that are liquid at room temperature to triglycerides with quite high melting points e.g. above 60°C. This results in a flat SFC profile and a rather waxy or sticky mouthfeel upon eating.

It is known that these drawbacks may be overcome by fractionating the interesterified fats. In this way a harder fat can be produced with a sharper melting profile. Said types of fats are typically used in confectionery coating applications. For example, EP 2014174 describes such fat compositions for use as coatings, such as on bakery or confectionery products. In particular, a mid-fraction of an interesterified palm oil stearin (i.e. a palm oil fraction) was obtained by interesterification of palm oil stearin, followed by a fractionation of the interesterified palm oil stearin. A further example of such fat compositions is provided in Chong C N et al (Fractionation procedures for obtaining cocoa butter-like fat from enzymatically interesterified palm olein, Journal of the American oil chemists' society (JAOCS), Springer, vol. 69, no. 2, 1 February 1992, pages 137-140). In particular, a cocoa butter-like fat is obtained by solvent fractionation of enzymatically interesterified palm olein.

WO 2006/037341 A1 also describes such fat compositions having a steep SFC-melting profile based on vegetable oils predominantly consisting of asymmetric triglycerides with a low content of lauric acid. However, the fat compositions of WO 2006/037341 A1 contain considerable amounts of saturated fatty acids or contain trans fatty acids obtained through partial hydrogenation of starting oil. Both are to be avoided or reduced in view of obtaining a good nutritional profile.

Another approach to deal with the flat SFC-profile of interesterified palm or shea products is to combine them with fractionated palm products with a sharp profile. Examples of this method with their application in confectionery creams can be found in EP 0815738 and in EP 0555917.

Interesterified fats are characterized by having rather strong structuring properties. Because of this characteristic, interesterified fats are especially suitable for use in margarines, and in confectionery fillings and creams.

In yet another approach, use may also be made of mid-fractions of interesterified fats that are further combined with liquid oils. This results in fat compositions that can provide a quite strong structure, while containing a limited amount of saturated fatty acids (SAFA).

Examples of such fat compositions are described in WO 2011/161213 A1. In particular, WO 2011/161213 A1 describes non-temper fat compositions that do not require tempering i.e. that solidify in a stable form. It should be mentioned that the main focus of WO 2011/161213 A1 is on fat compositions with a rather high content of C18:0 fatty acid versus C16:0 fatty acid content that are interesterified, fractionated and combined with liquid oils, i.e. oils with a MP of not more than 25°C.

Specifically, in WO 2011/161213 A1, shea butter or shea butter fractions, typical starting fats for randomized interesterification, are used in combination with sunflower oil. The interesterified fats obtained therefrom are further subjected to a fractionation process to produce a middle fraction. In the latter process, a high melting fraction and a liquid fraction are removed. Said high melting fraction is a fraction of tri-saturated triglycerides (S3-types) that can create a waxy mouthfeel, in particular in confectionery products, since they do not melt at body temperature. The middle fraction is then again combined with a liquid oil, in particular high oleic sunflower oil. The aim of the replacement of the liquid fraction by another liquid oil, is to reduce the SAFA content. Specifically, the liquid fraction, as removed from the interesterified fat, consists of SU2 and U3 triglycerides, which are both liquid at room temperature. The liquid oil that is added afterwards to the middle fraction consists mainly of U3 triglycerides (e.g. high oleic sunflower oil).

Thus, it can be concluded that the SU2 fraction in the interesterified fats of WO 2011/161213 A1, consisting of SUU and USU triglycerides, is considered as a non-useful fraction which should be removed to reduce the SAFA content.

It should be said that removing the maximal amount of S3 and SU2 triglycerides requires rather complicated and expensive fractionation processes. In particular, expensive solvent based fractionation processes whereby solvents, such as hexane or acetone, need to be utilized. Additionally, shea butter or shea butter fractions, being C18 type fats, are also more expensive than C16 type fats, i.e. palm based fats. On the other hand, fat compositions with lower SAFA content have also the drawback of slow crystallisation, especially when they are based on C16 type fats, i.e. palm based.

In view of the above, there is a continuous need to provide improved non-temper, low-lauric fat compositions having a reduced SAFA-level which are characterized by having improved crystallisation properties and that have improved taste sensation properties, e.g. a creamy mouthfeel with good flavour release when used in edible and/or food products, in particular in confectionery, bakery and dairy products. There is also a further need to provide more economical and more versatile processes for producing said fat compositions.

### Summary of the invention

The inventors have now surprisingly found that it is possible to provide non-temper, low-lauric fat compositions having a reduced SAFA-level fulfilling the above mentioned needs.

It is thus an object of the present invention to provide a fat composition comprising a triglyceride composition, wherein said triglyceride composition comprises with respect to the total weight of the triglyceride composition:
a) less than 50 percent by weight [wt %, herein after] of UUU-triglycerides [U3, herein after],
b) SU2-triglycerides [SU2, herein after] and S2U-triglycerides [S2U, herein after] wherein the sum of the amounts of SU2 and S2U is at least 50 wt %,
c) SSU-triglycerides [SSU, herein after] and SUS-triglycerides [SUS, herein after] wherein the weight ratio of SSU/SUS is more than 1.0,
d) and wherein the weight ratio of SU2/U3 is from 0.6 to 1.3,
e) less than 8 wt % of SSS-triglycerides [S3, herein after],
f) and wherein the weight ratio of S3/ S2U is less than 0.20, and
   wherein the fat composition comprises with respect to the total weight of the fat composition:
g) less than 47 wt % of saturated fatty acid residues having from 6 to 24 carbon atoms (SAFA),
h) less than 10 wt % of C12:0 fatty acid residues,
   wherein U represents an unsaturated fatty acid residue having from 16 to 24 carbon atoms and S represents a saturated fatty acid residue having from 6 to 24 carbon atoms.

It is a further object of the present invention to provide a process of preparing said fat composition.

It is a further object of the present invention to provide an edible product obtained from said fat composition.

### Detailed description of the invention

### The fat composition

The fat composition of the present invention has limited SAFA content, being less than 47 wt %, relative to the total weight of the fat composition. This provides a healthy nutritional profile to the fat composition of the present invention.

According to a preferred embodiment, the SAFA content in the fat composition of the present invention is less than 45 wt %, more preferably less than 40 wt %, even more preferably less than 38 wt %, relative to the total weight of the fat composition.

Although the lower limit of the SAFA content is not critical, the SAFA content in the fat composition of the present invention is advantageously in the range from 23 to 47 wt %, preferably in the range from 25 to 45 wt %, more preferably in the range from 28 to 40 wt %, relative to the total weight of the fat composition.

The amount of S3 triglycerides, having a high melting point and tending to create a waxy mouthfeel, is thus limited in the fat composition.

As said, the weight percent of S3 relative to the total weight of the triglyceride composition, is less than 8 wt %, preferably less than 7 wt %, more preferably less than 6 wt %.

According to a preferred embodiment, the weight ratio of SU2/U3 in the triglyceride composition comprised in the fat composition is from 0.65 to 1.20, preferably from 0.70 to 1.10.

The Inventors have surprisingly found that the optimal balance of SU2 and U3 in the fat composition of the present invention, provides improved taste sensation properties, in particular an edible product comprising said fat composition, is characterized by having a nice melting profile in the mouth.

Additionally, the combination of having a limited amount of S3 and an optimal balance of SU2 and U3 contributes to the fact that the fat composition of the present invention can be produced economically, as discussed in detail below.

According to certain preferred embodiments of the present invention, the triglyceride composition comprised in the fat composition of the present invention is further characterized by at least one of the following features:
a) less than 45 wt % of U3, preferably less than 42 wt % of U3, more preferably less than 40 wt % of U3,
b) the sum of the amounts of SU2 and S2U is at least 55 wt %, preferably at least 60 wt %
c) the weight ratio of SSU/SUS is more than 1.2, preferably more than 1.5,
f) the weight ratio of S3/ S2U is less than 0.18, and
   wherein U represents an unsaturated fatty acid residue having from 16 to 24 carbon atoms and S represents a saturated fatty acid residue having from 6 to 24 carbon atoms, and
   wherein all wt % are based on the total weight of the triglyceride composition.

   According to certain preferred embodiments of the present invention, the fat composition of the present invention is further characterized by having
h) less than 5 wt % of C12:0 fatty acid residues, preferably less than 1 wt %, with respect to the total weight of the fat composition.

Having a majority of asymmetrical triglycerides, as detailed above, provides the property of non-tempering to the fat composition of the present invention. In other words, the fat composition of the present invention is a stable non-temper fat composition.

It should be noted that SUS-triglycerides may show a higher risk for recrystallization than SSU types.

Thus, the fat composition of this invention is characterised in having a limited amount of lauric acid containing components (e.g. feature h above).

According to a preferred embodiment of the present invention, the fat composition of this invention comprises C16:0 and C18:0 fatty acid residues. Advantageously, the weight ratio of C16:0 fatty acid residues to C18:0 fatty acid residues (C16:0/C18:0) is more than 1.0, preferably more than 2.0, more preferably more than 3.0, even more preferably more than 5.0.

In other words, the fat composition of the present invention is preferably derived from C16:0 type of fats, i.e. palm based raw materials. Palm based fats are cheaper and can perform well in filling and cream applications.

Among palm based raw materials mention may be made of notably palm oil, palm olein, palm stearine and combinations thereof.

According to certain preferred embodiments of the present invention, the fat composition of the present invention is further characterized by having a Solid Fat Content profile (SFC-profile) which is such that:
- the SFC of the fat composition at 20°C is more than 10 %, preferably more than 12 %, more preferably more than 14 %, most preferably more than 17 %,
- the SFC of the fat composition at 35°C is less than 4 %, preferably less than 3 %, and
- the difference between the SFC of the fat composition at 20°C and 35°C is at least 10.0 %, preferably at least 12.0 %, more preferably at least 15.0 %
wherein the SFC is the SFC measured according to method IUPAC 2.150 a.

The SFC-profile of the fat composition of the present invention, as detailed above, is a contributory factor in providing the fat composition with a sufficiently high crystallisation speed and an excellent melting sensation in the mouth.

The fat composition of the present invention may comprise mono- and/or diglycerides but these will typically be present in smaller quantities than the triglyceride composition.

According to certain embodiments of the present invention, the fat composition comprises the mono- and/or a diglycerides an amount of less than 20 wt %, preferably less than 10% wt %, more preferably less than 5 wt %, even more preferably less than 3 wt %, relative to the total weight of the fat composition.

According to certain embodiments of the present invention, the fat composition comprises the triglyceride composition, as detailed above, in an amount of more than 80 wt %, preferably more than 90 % wt %, more preferably more than 95 wt %, even more preferably more than 97 wt %, relative to the total weight of the fat composition.

According to another embodiment of the present invention, the fat composition consists of the triglyceride composition, as detailed above.

The Inventors have surprisingly found that the non-temper and low-lauric fat composition of this invention, as detailed above, endowed with improved nutritional properties is further characterized by having improved crystallisation properties and improved taste sensation properties, e.g. a creamy mouthfeel with good flavour release when used in edible and/or food products, in particular in confectionery creams and fillings, as demonstrated in detail in the working examples.

### The manufacture of the fat composition

Another aspect of the present invention is a process for the manufacture of the fat composition, as detailed above.

For producing the fat composition of the present invention, several processes may suitably be used.

However, the process for producing the fat composition, as detailed above, comprises at least the following steps:
- interesterification of at least one fat A wherein the at least one fat A comprises less that 10 wt % of C12:0 fatty acid residues, preferably less than 5 wt %, relative to the total weight of the fat A, thereby forming an interesterified fat,
- subjecting said interesterified fat to one or more fractionation steps thereby forming a fractionated interesterified fat, and
- blending said fractionated interesterified fat with at least one liquid oil.

Preferably, the at least one fat A is based on C16:0 type fats, i.e. palm based fats.

Non-limitative examples of fats A that can suitably be used in the process according to the present invention may include palm oil, palm oil fractions and combinations thereof, combinations of palm oil or palm oil fractions with liquid oils, combinations of palm oil or palm oil fractions with shea butter or shea butter fractions, combinations of palm oil or palm oil fractions with liquid oils and shea butter or shea butter fractions.

For the purpose of the present invention, the term "palm oil fractions" refers to components of palm oil obtained from fractionation of palm oil.

For the purpose of the present invention, the term "fractionation" refers to a physical separation process applied to fats or oils resulting in fractions of the fat or oil having different compositions.

In the process according to the present invention, the interesterification of the at least one fat A, may be either a complete randomization or only a partial interesterification, and may be performed using a chemical or an enzymatic method, preferably the chemical method.

The amounts and particular types of the liquid oil may be suitably chosen in order to achieve the properties desired for the fat composition being produced.

Non-limitative examples of liquid oils that can suitably be used in the process according to the present invention may include sunflower oil, high oleic sunflower oil, soybean oil, rapeseed oil, canola oil, corn oil, arachidic oil, hazelnut oil, preferably high oleic sunflower oil.

Preferably, the fat composition according to this invention and as obtained in the process according to the invention, comprises the fractionated interesterified fat in an amount from 90 to 50 wt % and the at least one liquid oil in an amount from 10 to 50 wt %, relative to the total weight of the fat composition.

Depending on the nature of the at least one fat A, the skilled in the art may suitably perform a 1-step, a 2-step, a 3-step or even a multiple-step fractionation process in order to obtain the fat composition of the present invention having the desired properties.

According to one preferred embodiment of the present invention, the process for producing the fat composition, as detailed above, comprises the following steps:
- interesterification of the at least one fat A, as detailed above, thereby forming an interesterified fat,
- subjecting said interesterified fat to a 1-step fractionation process wherein said 1-step fractionation process comprises the removal of at least one stearin fraction, thereby forming an olein fraction of the interesterified fat, and
- blending of said olein fraction with at least one liquid oil, as detailed above, thereby forming the fat composition according to the invention.

According to another preferred embodiment of the process of the present invention, the process for producing the fat composition, as detailed above, comprises the following steps:
- interesterification of the at least one fat A, as detailed above, thereby forming an interesterified fat,
- subjecting said interesterified fat to a multi-step fractionation process, preferably a 2-step fractionation process wherein said multi-step fractionation process, preferably a 2-step fractionation process, comprises the removal of at least one olein fraction and at least one stearin fraction, thereby forming a mid-fraction of the interesterified fat, and
- blending of said mid-fraction with at least one liquid oil, as detailed above, thereby forming the fat composition according to the invention.

The Inventors have now found that when multi-step fractionation processes, in particular 2-step fractionation processes, are performed, whereby at least one olein fraction and at least one stearin fraction are removed, an optimal removal of the liquid fraction, which typically contains the U3 and SU2 triglycerides is applied.

The Inventors have further found that a high degree removal of SU2 triglycerides, that can be obtained through for example solvent fractionation processes or fractionation processes with several consecutive steps, followed by addition of at least one liquid oil to the fraction obtained, does not necessarily lead to the best result, for example when the total fat composition is used in confectionery fillings or creams: too high removal of SU2 triglycerides gives rise to a loss in crystallisation speed and to a poorer taste sensation of the final product.

Fractionation processes are known in the art. In general fractionation can take place in the absence (dry fractionation) or presence (wet fractionation) of an additional solvent, such as acetone or hexane. Preferably, the fractionation process is a dry fractionation process, which is clearly cheaper than a solvent fractionation process.

Fractionation parameters include notably the rate of cooling, the final cooling temperature, the duration of holding at a given temperature, the diameters and distribution of perforations in filter screens, and the amount and duration of pressure. The temperatures, pressures and rate of cooling needed for fractionation are varied according to the properties of the at least one interesterified fat and the properties desired for the fat composition being produced.

It is further understood that all definitions and preferences as described above equally apply for this embodiment and all further embodiments, as described below.

### An edible product and/or food product

The fat composition, as detailed above, may be used in the process for the manufacture of an edible product.

Another aspect of the present invention is the use of the fat composition, as detailed above, in the process for the manufacture of an edible product.

The present invention further relates to the edible product comprising the fat composition of the present invention, as detailed above.

According to a preferred embodiment, the edible product according to the present invention comprises from 15 to 75 wt % of the fat composition, preferably from 20 to 60 wt %, more preferably from 25 to 40 wt %, relative to the total weight of the edible product.

Advantageously, the edible product further comprises at least one component selected from the group consisting of sugar, flour, starch, milk ingredients, cocoa powder, coffee powder, sugar substitutes, sweeteners, natural and synthetic colorants, emulsifiers, flavours.

Among milk ingredients mention may be made of full or skimmed milk powder, whey powder or lactose.

Among sugar substitutes mention may be made of (1) non-nutritive sweeteners such as notably steviol glycosides, thaumatine, luon han guo extract, brazzeïne, monatin, neohespiridine, neotame, saccharin, sucralose, acesulfame K, aspartame, sugar alcohols and the like, and (2) nutritive sweeteners such as notably all sugars commonly found in food such as glucose, fructose, galactose, sucrose, maltose, corn based sweeteners and low digestible carbohydrates e.g polydextrose, inulin, oligofructose, maltodextrin and the like.

Among emulsifiers mention can be made of PGPR, lecithin and fractions thereof.

According to a preferred embodiment, the edible product according to the present invention comprises from 25 to 85 wt % of the at least one component, preferably from 40 to 75 wt %, more preferably from 50 to 70 wt %, relative to the total weight of the edible product.

If desired, the edible product, as detailed above, may comprise water. The amount of water may be suitable chosen in order to achieve the properties desired for the edible product being produced.

The edible product according to the present invention may take any form considered suitable by the person skilled in the art, for example it may be a confectionery product, in particular a cream, a coating, a filling, a filled chocolate product, a non-emulsified spread, a culinary product, a dough or a baked product, a solid fat ingredient for food products, soft cheese, or any other edible product known to the person skilled in the art. Preferably, the edible product is a confectionery product. More preferably, the edible product is a confectionery cream or filling.

For producing the edible product, as detailed above, several processes may suitably be used. However, the process for producing the above-described edible product, which preferably is a confectionery cream or filling, preferably comprises the steps of blending
- from 15 to 75 wt % of the fat composition, as detailed above, being in an at least partly molten form, preferably in completely molten form
- from 25 to 85 wt % of the at least one component, and
- optionally water.

Another aspect of the present invention is the use of the edible product, as detailed above, in the process for the manufacture of a further food products.

The edible product according to the present invention may be used in the production of further food products such as for example those selected from the group consisting of a filled chocolate product, a biscuit coated with a cream layer wherein the cream layer as such may optionally be further coated with a coating, a biscuit having a cream layer sandwiched between two or more biscuit layers, extruded products with an interior structured filling, baked products with a structured filling, filled or topped confectionery products, filled or topped culinary products, and any other food product known to the person skilled in the art.

Another aspect of the present invention is the use of the fat composition, as detailed above, in the process for the manufacture of a food product selected from the group consisting of confectionery compositions, in particular a cream, a coating, a tablet, a filling, a filled chocolate product, a biscuit coated with a cream layer wherein the cream layer as such may optionally be further coated with a coating, a biscuit having a cream layer sandwiched between two or more biscuit layers, non-emulsified spreads, culinary products, solid fat ingredients for food products, soft cheese, extruded products with an interior structured filling, baked products with a structured filling, and food products which are typically stored below room temperature and consumed at such temperature, for example between 0 and 10°C, for example products stored in the refrigerator and consumed at refrigerator temperature.

The present invention is further illustrated by the examples and comparative examples given below.

All blending ratios, contents and concentrations in this text are given in weight units and weight percent, unless stated otherwise.

### Example 1: preparation of a fat composition according to the invention

A fat composition A was prepared by interesterification of a palmolein with an IV of 62.1, followed by a 2-step dry fractionation process in which a stearin fraction with high PPP-content and an olein fraction with high POO content were removed. In the first fractionation step, oil was cooled down under slow stirring to 30°C, followed by filtration. A stearin was obtained with an IV of 45.1 and an olein with an IV of 66.2. This olein was then subjected to a second fractionation step by cooling it down to 16°C, followed by a filtration step. A stearin was obtained with an IV of 56.6 and an olein with an IV of 69.4.The stearin from this second fractionation step is a mid fraction characterized by an SU2 content of 36.1 % on the total triglyceride composition. It was then combined with high oleic sunflower oil in a ratio 75/25 to obtain example 1. The characteristics of example 1 are summarized in Table 1.

### Comparative Example 2: preparation of a fat composition B

A fat composition B was prepared by interesterification of a palm stearine, followed by a 2-step solvent fractionation process in which a stearin fraction with high PPP-content and an olein fraction with high POO content were removed. The obtained mid-fraction was a fat characteristed by an SU2 content of 12.5 % on the total triglyceride composition. In order to obtain comparable levels of S3 and S2U triglycerides as in example 1, a certain amount of interesterified palm olein IV 62 and palm stearine IV 12 were added, followed by the addition of 50% of high oleic sunflower oil to obtain Example 2. The characteristics of comparative example 2 are summarized in Table 1.

As can be seen from this Table 1, example 1 and comparative example 2 have a comparable SFC profile, have quite comparable S3 and S2U triglycerides content. The major difference between fat composition A and fat composition B is that fat composition A has a higher SU2 content, while fat composition B has a higher U3 content. This also explains the difference in SAFA-content.

In comparative example 2, the major palm component is obtained through solvent fractionation which results in low SU2 levels and the possibility to add high amounts of sunflower oil afterwards (50%). In example 1 the major palm component is obtained through dry fractionation which results in higher SU2 levels and the possibility to add only a more limited amount of sunflower oil afterwards (25%).

**Table 1:**

| | **Example 1** | **Comparative example 2** |
|---|---|---|
| *Fatty acid residue concentrations (wt* %*)* | | |
| C8:0 | 0.1 | 0.1 |
| C10:0 | 0.1 | 0.0 |
| C12:0 | 0.6 | 0.4 |
| C14:0 | 1.0 | 0.7 |
| C16:0 | 30.7 | 27.3 |
| C18:0 | 4.1 | 3.7 |
| C18:1 | 51.2 | 57.7 |
| C18:2 | 11.2 | 9.1 |
| C18:3 | 0.2 | 0.1 |
| C20:0 | 0.4 | 0.3 |
| C22:0 | 0.3 | 0.4 |
| C24:0 | 0.1 | 0.2 |
| SAFA | 37.4 | 33.1 |
| C16:0 / C18:0 | 7.5 | 7.6 |
| *SFC profile* | | |
| SFC 20 | 17.1 | 16.7 |
| SFC 25 | 10.2 | 10.5 |
| SFC 30 | 5.7 | 6.3 |
| SFC 35 | 2.0 | 3.6 |
| Delta SFC 20 - SFC 35 | 15.1 | 13.1 |
| *Triglycerides composition (wt* %) | | |
| S3 | 4.5 | 5.3 |
| S2U | 30.9 | 28.4 |
| SU2 | 31.8 | 22.3 |
| U3 | 32.8 | 44.0 |
| S2U + SU2 | 62.5 | 50.7 |
| SU2/U3 | 0.97 | 0.51 |
| S3/S2U | 0.15 | 0.19 |

### Example 3

Confectionery creams 1 and 2 were prepared with example 1 and comparative example 2 according to the following recipe:

| | |
|---|---|
| Sugar | 55.0 % |
| Fat | 28.8 % |
| Cocoa Powder 10/12 | 16% |
| Lecithin | 0.2 % |

### Preparation of the confectionery creams 1 and 2 according to following general procedure:

The fat composition was completely molten at 60°C and the dry ingredients and the lecithin were added and mixed. The blend was kept overnight at 45°C.

Sample cups were filled. The cups were cooled for 30 min at 5°C and 30 min at 15°C The cups were then transferred to an incubator at 20°C.

### Monitoring of the speed of the solidification process during preparation of the confectionery creams 1 and 2 was monitored according to following general procedure:

Creams at 45°C were deposited in cups that were put for 2 hours at 35°C. Then the cups were put in a cooling device at 10°C and after 5.0, 7.5 and 10.0 minutes cups were taken for measuring the texture of the creams with a Texture meter TA.XT Plus and using a cylindrical probe with a diameter of 3 mm measuring to a depth of 10 mm, speed 0.5mm/sec.

The results are summarized in Table 2.

**Table 2:**

| **Cooling time** | **Texture confectionery cream 1 (g)** | **Texture confectionery cream 2 (g)** |
|---|---|---|
| 5.0 min | 0 | 0 |
| 7.5 min | 34 | 19 |
| 10.0 min | 280 | 120 |

As can be seen from these results, confectionery cream 1 was performing better than confectionery cream 2.

Samples of the confectionery cream 1 (i.e. sample 1) and the confectionery cream 2 (i.e. sample 2), respectively, were then stored for 1 month at 20°C.

### Evaluation of the texture

The texture of sample 1 and sample 2, respectively, was measured using a texture meter TA.XT Plus equipped with a probe of 10 mm diameter, measuring to a depth of 3 mm, 0.5mm/sec upon storage at 20°C after 1 day and after 1 month: sample 1 and sample 2, respectively, were stable, i.e. showing no post-hardening and both showed very comparable results. Table 3 summarizes the results.

**Table 3:**

| | **Sample 1 (g)** | **Sample 2 (g)** |
|---|---|---|
| After 1 day at 20°C | 216 | 215 |
| After 1 month at 20°C | 223 | 212 |

### Evaluation of the taste

The samples were then tested by a taste panel of 8 persons. They were asked to give a score on creaminess, flavor release and waxiness between 0 and 5 and also to indicate which sample they preferred. The averaged results are summarized in Table 4

**Table 4 :**

| **Properties** | **Sample 1** | **Sample 2** |
|---|---|---|
| Creaminess | 3.4 | 2.6 |
| Flavor release | 2.9 | 2.5 |
| Waxiness | 0.0 | 0,1 |
| Overall preferred | 8 times | 0 times |

Cream sample 1 was clearly preferred and was described by the taste panel as more creamy and having a better flavor release.

## Claims

1. A fat composition comprising a triglyceride composition, wherein said triglyceride composition comprises with respect to the total weight of the triglyceride composition:
a) less than 50 percent by weight [wt %, herein after] of UUU-triglycerides [U3, herein after],
b) SU2-triglycerides [SU2, herein after] and S2U-triglycerides [S2U, herein after] wherein the sum of the amounts of SU2 and S2U is at least 50 wt %,
c) SSU-triglycerides [SSU, herein after] and SUS-triglycerides [SUS, herein after] wherein the weight ratio of SSU/SUS is more than 1.0,
d) and wherein the weight ratio of SU2/U3 is from 0.6 to 1.3,
e) less than 8 wt % of SSS-triglycerides [S3, herein after],
f) and wherein the weight ratio of S3/ S2U is less than 0.20, and
wherein the fat composition comprises with respect to the total weight of the fat composition:
g) less than 47 wt % of saturated fatty acid residues having from 6 to 24 carbon atoms (SAFA),
h) less than 10 wt % of C12:0 fatty acid residues,
wherein U represents an unsaturated fatty acid residue having from 16 to 24 carbon atoms and S represents a saturated fatty acid residue having from 6 to 24 carbon atoms.

2. The fat composition according to claim 1, wherein the SAFA content in the fat composition is less than 45 wt%, preferably less than 40 wt %, more preferably less than 38 wt %, relative to the total weight of the fat composition.

3. The fat composition according to claim 1 or claim 2, wherein the weight percent of S3 relative to the total weight of the triglyceride composition, is less than 7 wt %, preferably less than 6 wt %.

4. The fat composition according to any one of claims 1 to 3, wherein the weight ratio of SU2/U3 is from 0.65 to 1.2, preferably from 0.7 to 1.1.

5. The fat composition according to any one of claims 1 to 4, wherein the triglyceride composition is further **characterized by** at least one of the following features:
a) less than 45%, preferably less than 42 wt % of U3, more preferably less than 40 wt % of U3,
b) the sum of the amounts of SU2 and S2U is at least 55 wt %, preferably at least 60 wt %
c) the weight ratio of SSU/SUS is more than 1.2, preferably more than 1.5,
f) the weight ratio of S3/ S2U is less than 0.18,
wherein U represents an unsaturated fatty acid residue having from 16 to 24 carbon atoms and S represents a saturated fatty acid residue having from 6 to 24 carbon atoms, and wherein all wt % are based on the total weight of the triglyceride composition.

6. The fat composition according to any one of claims 1 to 5, wherein the fat composition is further **characterized by** having:
h) less than 5 wt % of C12:0 fatty acid residues, preferably less than 1 wt % with respect to the total weight of the fat composition.

7. The fat composition according to any one of claims 1 to 6, wherein the fat composition comprises C16:0 and C18:0 fatty acid residues in a weight ratio of C16:0 fatty acid residues to C18:0 fatty acid residues (C16:0/C18:0) of more than 1.0, preferably more than 2.0, more preferably more than 3.0, even more preferably more than 5.0.

8. The fat composition according to any one of claims 1 to 7, wherein the fat composition has a SFC at 20°C of more than 10%, preferably more than 12%, more preferably more than 14%, most preferably more than 17 %.

9. The fat composition according to any one of claims 1 to 8, wherein the fat composition has a SFC at 35°C of less than 4%, preferably less than 3%.

10. The fat composition according to any one of claims 1 to 9, wherein the difference in SFC of the fat composition at 20°C and 35°C is at least 10 %, preferably at least 12 %, more preferably at least 15.0 %.

11. A process for the manufacture of the fat composition according to any one of claims 1 to 10, wherein said process comprises the following steps:
- interesterification of at least one fat A wherein the at least one fat A comprises less that 10 wt % of C12:0 fatty acid residues, preferably less than 5 wt %, relative to the total weight of the fat A, thereby forming an interesterified fat,
- subjecting said interesterified fat to one or more fractionation steps thereby forming a fractionated interesterified fat, and
- blending said fractionated interesterified fat with at least one liquid oil, thereby forming the fat composition according to one of claims 1 to 10.

12. The process according to claim 11, wherein the at least one fat A is selected from the group consisting of palm oil, palm oil fractions and combinations thereof, combinations of palm oil or palm oil fractions with liquid oil, combinations of palm oil or palm oil fractions with shea butter or shea butter fractions, combinations of palm oil or palm oil fractions with liquid oils and shea butter or shea butter fractions.

13. The process according to claim 11 or claim 12, wherein the at least one liquid oil is selected from the group consisting of sunflower oil, high oleic sunflower oil, soybean oil, rapeseed oil, canola oil, corn oil, arachidic oil, hazelnut oil, preferably high oleic sunflower oil.

14. The process according to any one of claims 11 to 13, wherein the process comprises the following steps:
- interesterification of the at least one fat A thereby forming an interesterified fat,
- subjecting said interesterified fat to a 1-step fractionation process wherein said 1-step fractionation process comprises the removal of at least one stearin fraction, thereby forming an olein fraction of the interesterified fat, and
- blending of said olein fraction with the at least one liquid oil thereby forming the fat composition according to any one of claims 1 to 10.

15. The process according to any one of claims 11 to 13, wherein the process comprises the following steps:
- interesterification of the at least one fat A thereby forming an interesterified fat,
- subjecting said interesterified fat to a multi-step fractionation process, preferably a 2-step fractionation process wherein said multi-step fractionation process, preferably 2-step fractionation process, comprises the removal of at least one olein fraction and at least one stearin fraction, thereby forming a mid-fraction of the interesterified fat, and
- blending of said mid-fraction with the at least one liquid oil, thereby forming the fat composition according to any one of claims 1 to 10.

16. An edible product, wherein said edible product comprises:
- from 15 to 75 wt % of a fat composition, preferably from 20 to 60 wt %, more preferably from 25 to 40 wt %, relative to the total weight of the edible product, the fat composition comprising a triglyceride composition, wherein said triglyceride composition comprises with respect to the total weight of the triglyceride composition:
a) less than 50 percent by weight of UUU- triglycerides,
b) SU2-triglycerides and S2U-triglycerides wherein the sum of the amounts of SU2 and S2U is at least 50 wt %,
c) SSU-triglycerides and SUS-triglycerides wherein the weight ratio of SSU/SUS is more than 1.0,
d) and wherein the weight ratio of SU2/U3 is from 0.6 to 1.3,
e) less than 8 wt % of SSS-triglycerides,
f) and wherein the weight ratio of S3/ S2U is less than 0.20, and wherein the fat composition comprises with respect to the total weight of the fat composition:
g) less than 47 wt % of saturated fatty acid residues having from 6 to 24 carbon atoms (SAFA),
h) less than 10 wt % of C12:0 fatty acid residues,
wherein U represents an unsaturated fatty acid residue having from 16 to 24 carbon atoms and S represents a saturated fatty acid residue having from 6 to 24 carbon atoms, and
- from 25 to 85 wt % of at least one component selected from the group consisting of sugar, flour, starch, milk ingredients, cocoa powder, coffee powder, sugar substitutes, sweeteners, natural and synthetic colorants, emulsifiers, flavours, preferably from 40 to 75 wt %, more preferably from 50 to 70 wt %, relative to the total weight of the edible product.

17. The edible product according to claim 16, wherein said edible product is selected from the group consisting of confectionery product, in particular a cream, a coating, a filling, a filled chocolate product, a non- emulsified spread, a culinary product, a dough or a baked product, a solid fat ingredient for food products, soft cheese, preferably a confectionery product, more preferably, a confectionery cream or filling.

18. A food product comprising the edible product according to any one of claims 16 and 17, the food product being selected from the group consisting of a filled chocolate product, a biscuit coated with a cream layer wherein the cream layer as such may optionally be further coated with a coating, a biscuit having a cream layer sandwiched between two or more biscuit layers, extruded products with an interior structured filling, baked products with a structured filling, filled or topped confectionery products, and filled or topped culinary products.

## Patentansprüche

1. Eine Fettzusammensetzung, welche eine Triglyceridzusammensetzung umfasst, wobei die erwähnte Triglyceridzusammensetzung in Bezug auf das Gesamtgewicht der Triglyceridzusammensetzung Folgendes umfasst:
a) weniger als 50 Gewichtsprozent [nachstehend Gew.-%] UUU-Triglyceride [nachstehend U3],
b) SU2-Triglyceride [nachstehend SU2] und S2U-Triglyceride [nachstehend S2U], wobei die Summe der Mengen von SU2 und S2U zumindest 50 Gew.-% beträgt,
c) SSU-Triglyceride [nachstehend SSU] und SUS-Triglyceride [nachstehend SUS], wobei das Gewichtsverhältnis SSU/SUS mehr als 1,0 beträgt,
d) und wobei das Gewichtsverhältnis von SU2/U3 von 0,6 bis 1,3 beträgt,
e) weniger als 8 Gew.-% SSS-Triglyceride [nachstehend S3],
f) und wobei das Gewichtsverhältnis S3/S2U weniger als 0,20 beträgt, und
wobei die Fettzusammensetzung in Bezug auf das Gesamtgewicht der Fettzusammensetzung Folgendes umfasst:
g) weniger als 47 Gew.-% gesättigte Fettsäurereste mit 6 bis 24 Kohlenstoffatomen (SAFA),
h) weniger als 10 Gew.-% C12:0-Fettsäurereste,
wobei U für einen ungesättigten Fettsäurerest mit 16 bis 24 Kohlenstoffatomen steht und S für einen gesättigten Fettsäurerest mit 6 bis 24 Kohlenstoffatomen steht.

2. Die Fettzusammensetzung nach Anspruch 1, wobei der SAFA-Gehalt in der Fettzusammensetzung weniger als 45 Gew.-%, bevorzugt weniger als 40 Gew.-%, noch besser weniger als 38 Gew.-%, in Bezug auf das Gesamtgewicht der Fettzusammensetzung beträgt.

3. Die Fettzusammensetzung nach Anspruch 1 oder Anspruch 2, wobei der Gewichtsanteil von S3 in Bezug auf das Gesamtgewicht der Triglyceridzusammensetzung weniger als 7 Gew.-% beträgt, bevorzugt weniger als 6 Gew.-%.

4. Die Fettzusammensetzung nach irgendeinem der Ansprüche 1 bis 3, wobei das Gewichtsverhältnis von SU2/U3 von 0,65 bis 1,2 beträgt, bevorzugt von 0,7 bis 1,1.

5. Die Fettzusammensetzung nach irgendeinem der Ansprüche 1 bis 4, wobei die Triglyceridzusammensetzung ferner durch zumindest eines der folgenden Merkmale gekennzeichnet ist:
a) weniger als 45 %, bevorzugt weniger als 42 Gew.-% U3, noch besser weniger als 40 Gew.-% U3,
b) die Summe der Mengen von SU2 und S2U beträgt mindestens 55 Gew.-%, bevorzugt mindestens 60 Gew.-%,
c) das Gewichtsverhältnis von SSU/SUS beträgt mehr als 1,2, bevorzugt mehr als 1,5,
f) das Gewichtsverhältnis von S3/S2U beträgt weniger als 0,18,
wobei U für einen ungesättigten Fettsäurerest mit 16 bis 24 Kohlenstoffatomen steht und S für einen gesättigten Fettsäurerest mit 6 bis 24 Kohlenstoffatomen steht, und wobei alle Gew.-% auf dem Gesamtgewicht der Triglyceridzusammensetzung basieren.

6. Die Fettzusammensetzung nach irgendeinem der Ansprüche 1 bis 5, wobei die Fettzusammensetzung ferner **dadurch gekennzeichnet** ist, Folgendes zu haben:
h) weniger als 5 Gew.-% C12:0-Fettsäurereste, bevorzugt weniger als 1 Gew.-% in Bezug auf das Gesamtgewicht der Fettzusammensetzung.

7. Die Fettzusammensetzung nach irgendeinem der Ansprüche 1 bis 6, wobei die Fettzusammensetzung C16:0- und C18:0-Fettsäurereste in einem Gewichtsverhältnis von C16:0-Fettsäureresten zu C18:0-Fettsäureresten (C16:0/C18:0) von mehr als 1,0 umfasst, bevorzugt mehr als 2,0, noch besser mehr als 3,0, sogar noch besser mehr als 5,0.

8. Die Fettzusammensetzung nach irgendeinem der Ansprüche 1 bis 7, wobei die Fettzusammensetzung einen SFC bei 20 °C von mehr als 10 % hat, bevorzugt mehr als 12 %, noch besser mehr als 14 %, am besten mehr als 17 %.

9. Die Fettzusammensetzung nach irgendeinem der Ansprüche 1 bis 8, wobei die Fettzusammensetzung einen SFC bei 35 °C von weniger als 4 % hat, bevorzugt weniger als 3 %.

10. Die Fettzusammensetzung nach irgendeinem der Ansprüche 1 bis 9, wobei der Unterschied an SFC der Fettzusammensetzung bei 20 °C und 35 °C mindestens 10% beträgt, bevorzugt mindestens 12%, noch besser mindestens 15,0 %.

11. Ein Verfahren zur Herstellung der Fettzusammensetzung nach irgendeinem der Ansprüche 1 bis 10, wobei das erwähnte Verfahren die folgenden Schritte umfasst:
- Umesterung von zumindest einem Fett A, wobei das zumindest eine Fett A weniger als 10 Gew.-%, bevorzugt weniger als 5 Gew.-%, C12:0-Fettsäurereste in Bezug auf das Gesamtgewicht des Fettes A umfasst, wodurch ein umgeestertes Fett gebildet wird,
- Unterziehen des erwähnten umgeesterten Fettes einem oder mehreren Fraktionierungsschritten, wodurch ein fraktioniertes umgeestertes Fett gebildet wird, und
- Mischen des erwähnten fraktionierten umgeesterten Fettes mit zumindest einem flüssigen Öl, wodurch die Fettzusammensetzung nach einem der Ansprüche 1 bis 10 gebildet wird.

12. Das Verfahren nach Anspruch 11, wobei das zumindest eine Fett A ausgewählt wird aus der Gruppe bestehend aus Palmöl, Palmölfraktionen und Kombinationen davon, Kombinationen von Palmöl oder Palmölfraktionen mit flüssigem Öl, Kombinationen von Palmöl oder Palmölfraktionen mit Sheabutter oder Sheabutterfraktionen, Kombinationen von Palmöl oder Palmölfraktionen mit flüssigen Ölen und Sheabutter oder Sheabutterfraktionen.

13. Das Verfahren nach Anspruch 11 oder Anspruch 12, wobei das zumindest eine flüssige Öl ausgewählt wird aus der Gruppe bestehend aus Sonnenblumenöl, Sonnenblumenöl mit hohem Fettsäuregehalt, Sojaöl, Rapsöl, Doppelnull-Rapsöl, Maisöl, Erdnussöl, Haselnussöl, bevorzugt Sonnenblumenöl mit hohem Fettsäuregehalt.

14. Ein Verfahren nach irgendeinem der Ansprüche 11 bis 13, wobei das Verfahren die folgenden Schritte umfasst:
- Umesterung des zumindest einen Fettes A, wodurch ein umgeestertes Fett gebildet wird,
- Unterziehen des erwähnten umgeesterten Fettes einem Fraktionierungsverfahren in einem Schritt, wobei das erwähnte Fraktionierungsverfahren in einem Schritt das Entfernen von zumindest einer Stearinfraktion umfasst, wodurch eine Oleinfraktion des umgeesterten Fettes gebildet wird, und
- Mischen der erwähnten Oleinfraktion mit dem zumindest einen flüssigen Öl, wodurch die Fettzusammensetzung nach irgendeinem der Ansprüche 1 bis 10 gebildet wird.

15. Ein Verfahren nach irgendeinem der Ansprüche 11 bis 13, wobei das Verfahren die folgenden Schritte umfasst:
- Umesterung des zumindest einen Fettes A, wodurch ein umgeestertes Fett gebildet wird,
- Unterziehen des erwähnten umgeesterten Fettes einem Fraktionierungsverfahren in mehreren Schritten, bevorzugt einem Fraktionierungsverfahren in zwei Schritten, wobei das erwähnte Fraktionierungsverfahren in mehreren Schritten, bevorzugt das Fraktionierungsverfahren in zwei Schritten, das Entfernen von zumindest einer Oleinfraktion und zumindest einer Stearinfraktion umfasst, wodurch eine Mittelfraktion des umgeesterten Fettes gebildet wird, und
- Mischen der erwähnten Mittelfraktion mit dem zumindest einen flüssigen Öl, wodurch die Fettzusammensetzung nach irgendeinem der Ansprüche 1 bis 10 gebildet wird.

16. Ein essbares Produkt, wobei das erwähnte essbare Produkt Folgendes umfasst:
- 15 bis 75 Gew.-% einer Fettzusammensetzung, bevorzugt 20 bis 60 Gew.-%, noch besser 25 bis 40 Gew.-%, in Bezug auf das Gesamtgewicht des essbaren Produkts, wobei die Fettzusammensetzung eine Triglyceridzusammensetzung umfasst, wobei die erwähnte Triglyceridzusammensetzung in Bezug auf des Gesamtgewicht der Triglyceridzusammensetzung Folgendes umfasst:
a) weniger als 50 Gewichtsprozent UUU-Triglyceride,
b) SU2-Triglyceride und S2U-Triglyceride, wobei die Summe der Mengen von SU2 und S2U zumindest 50 Gew.-% beträgt,
c) SSU-Triglyceride und SUS-Triglyceride, wobei das Gewichtsverhältnis SSU/SUS mehr als 1,0 beträgt,
d) und wobei das Gewichtsverhältnis von SU2/U3 0,6 bis 1,3 beträgt,
e) weniger als 8 Gew.-% SSS-Triglyceride,
f) und wobei das Gewichtsverhältnis S3/S2U weniger als 0,20 beträgt, und wobei die Fettzusammensetzung in Bezug auf das Gesamtgewicht der Fettzusammensetzung Folgendes umfasst:
g) weniger als 47 Gew.-% gesättigte Fettsäurereste mit 6 bis 24 Kohlenstoffatomen (SAFA),
h) weniger als 10 Gew.-% C12:0-Fettsäurereste,
wobei U für einen ungesättigten Fettsäurerest mit 16 bis 24 Kohlenstoffatomen steht und S für einen gesättigten Fettsäurerest mit 6 bis 24 Kohlenstoffatomen steht, und
- 25 bis 85 Gew.-%, bevorzugt 40 bis 75 Gew.-%, noch besser 50 bis 70 Gew.-%, in Bezug auf das Gesamtgewicht des essbaren Produkts, zumindest einer Komponente ausgewählt aus der Gruppe bestehend aus Zucker, Mehl, Stärke, Milchbestandteilen, Kakaopulver, Kaffeepulver, Zuckerersatzprodukten, Süßstoffen, natürlichen und künstlichen Farbstoffen, Emulgatoren, Aromastoffen.

17. Das essbare Produkt nach Anspruch 16, wobei das erwähnte essbare Produkt ausgewählt wird aus der Gruppe bestehend aus Süßwarenprodukt, insbesondere einer Creme, einem Überzug, einer Füllung, einem gefüllten Schokoladenprodukt, einem nicht-emulgierten Aufstrich, einem kulinarischen Produkt, einem Teig oder einer Backware, einem festen Fettbestandteil für Nahrungsmittelprodukte, Weichkäse, bevorzugt einem Süßwarenprodukt, noch besser einer Süßwarencreme oder -füllung.

18. Ein Nahrungsmittelprodukt, welches das essbare Produkt nach irgendeinem der Ansprüche 16 und 17 umfasst, wobei das Nahrungsmittelprodukt ausgewählt wird aus der Gruppe bestehend aus einem gefüllten Schokoladenprodukt, einem Keks überzogen mit einer Cremeschicht, wobei die Cremeschicht als solche optional weiter mit einem Überzug überzogen sein kann, einem Keks mit einer Cremeschicht zwischen zwei oder mehreren Keksschichten, extrudierten Produkten mit einer inneren strukturierten Füllung, Backwaren mit einer strukturierten Füllung, gefüllten oder überzogenen Süßwarenprodukten und gefüllten oder überzogenen kulinarischen Produkten.

## Revendications

1. Composition de graisse comprenant une composition de triglycérides, dans laquelle ladite composition de triglycérides comprend, par rapport au poids total de la composition de triglycérides :
a) moins de 50 pour cent en poids [% en poids, ici après] de triglycérides UUU [U3, ici après],
b) des triglycérides SU2 [SU2, ici après] et des triglycérides S2U [S2U, ici après], dans laquelle la somme des quantités de SU2 et de S2U est d'au moins 50 % en poids,
c) des triglycérides SSU [SSU, ici après] et des triglycérides SUS [SUS, ici après], dans laquelle le rapport en poids de SSU/SUS est supérieur à 1,0,
d) et dans laquelle le rapport en poids de SU2/U3 est de 0,6 à 1,3,
e) moins de 8 % en poids de triglycérides SSS [S3, ici après],
f) et dans laquelle le rapport en poids de S3/ S2U est inférieur à 0,20, et
dans laquelle la composition de graisse comprend, par rapport au poids total de la composition de graisse :
g) moins de 47 % en poids de résidus d'acide gras saturé présentant de 6 à 24 atomes de carbone (SAFA),
h) moins de 10 % en poids de résidus d'acides gras C12:0,
dans laquelle U représente un résidu d'acide gras insaturé présentant de 16 à 24 atomes de carbone et S représente un résidu d'acide gras saturé présentant de 6 à 24 atomes de carbone.

2. Composition de graisse selon la revendication 1, dans laquelle la teneur en SAFA dans la composition de graisse est inférieure à 45 % en poids, de préférence inférieure à 40 % en poids, de manière plus préférée inférieure à 38 % en poids, par rapport au poids total de la composition de graisse.

3. Composition de graisse selon la revendication 1 ou la revendication 2, dans laquelle le pourcentage en poids de S3 par rapport au poids total de la composition de triglycérides est inférieur à 7 % en poids, de préférence inférieur à 6 % en poids.

4. Composition de graisse selon l'une quelconque des revendications 1 à 3, dans laquelle le rapport en poids de SU2/U3 est de 0,65 à 1,2, de préférence de 0,7 à 1,1.

5. Composition de graisse selon l'une quelconque des revendications 1 à 4, dans laquelle la composition de triglycérides est en outre **caractérisée par** au moins l'une des caractéristiques suivantes :
a) moins de 45 %, de préférence moins de 42 % en poids de U3, de manière plus préférée moins de 40 % en poids de U3,
b) la somme des quantités de SU2 et de S2U est d'au moins 55 % en poids, de préférence d'au moins 60 % en poids
c) le rapport en poids SSU/SUS est supérieur à 1,2, de préférence supérieur à 1,5,
f) le rapport en poids de S3/S2U est inférieur à 0,18,
dans laquelle U représente un résidu d'acide gras insaturé présentant de 16 à 24 atomes de carbone et S représente un résidu d'acide gras saturé présentant de 6 à 24 atomes de carbone, et dans laquelle tous les % en poids sont basés sur le poids total de la composition de triglycérides.

6. Composition selon l'une quelconque des revendications 1 à 5, dans lequel la composition de graisse est **caractérisée en outre en ce qu'**elle présente :
h) moins de 5 % en poids de résidus d'acide gras C12:0, de préférence moins de 1 % en poids par rapport au poids total de la composition de graisse.

7. Composition de graisse selon l'une quelconque des revendications 1 à 6, dans laquelle la composition de graisse comprend des résidus d'acide gras C16 :0 et C18 :0 dans un rapport en poids de résidus d'acide gras C16 :0 à résidus d'acide gras C18 :0 (C16 :0/C18 :0) de plus de 1,0, de préférence de plus de 2,0, de manière plus préférée de 3,0, de manière encore plus préférée de plus de 5,0.

8. Composition de graisse selon l'une quelconque des revendications 1 à 7, dans laquelle la composition de graisse présente une SFC à 20 °C de plus de 10 %, de préférence de plus de 12 %, de manière plus préférée de plus de 14 %, de la manière la plus préférée de plus de 17 %.

9. Composition de graisse selon l'une quelconque des revendications 1 à 8, dans laquelle la composition de graisse a une SFC à 35 °C de moins de 4 %, de préférence de moins de 3 %.

10. Composition de graisse selon l'une quelconque des revendications 1 à 9, dans laquelle la différence de SFC de la composition de graisse à 20 °C et 35 °C est d'au moins 10 %, de préférence d'au moins 12 %, de manière plus préférée d'au moins 15,0 %.

11. Procédé de fabrication de la composition de graisse selon l'une quelconque des revendications 1 à 10, dans lequel ledit procédé comprend les étapes suivantes consistant à :
- interestérifier au moins une graisse A, dans lequel la au moins une graisse A comprend moins de 10 % en poids de résidus d'acide gras C12:0, de préférence moins de 5 % en poids, par rapport au poids total de la graisse A, en formant ainsi une graisse interestérifiée,
- soumettre ladite graisse interestérifiée à une ou plusieurs étapes de fractionnement, en formant ainsi une graisse interestérifiée fractionnée, et
- mélanger ladite graisse interestérifiée fractionnée avec au moins une huile liquide, en formant ainsi la composition de graisse selon l'une des revendications 1 à 10.

12. Procédé selon la revendication 11, dans lequel la au moins une graisse A est choisie dans le groupe consistant en de l'huile de palme, des fractions d'huile de palme et des combinaisons de celles-ci, des combinaisons d'huile de palme ou de fractions d'huile de palme avec de l'huile liquide, des combinaisons d'huile de palme ou de fractions d'huile de palme avec du beurre de karité ou des fractions de beurre de karité, des combinaisons d'huile de palme ou de fractions d'huile de palme avec des huiles liquides et du beurre de karité ou des fractions de beurre de karité.

13. Procédé selon la revendication 11 ou la revendication 12, dans lequel ladite au moins une huile liquide est choisie dans le groupe consistant en de l'huile de tournesol, de l'huile de tournesol à haute teneur en acide oléique, de l'huile de soja, de l'huile de colza, de l'huile de canola, de l'huile de maïs, de l'huile arachidique, de l'huile de noisette, de préférence de l'huile de tournesol à haute teneur en acide oléique.

14. Procédé selon l'une quelconque des revendications 11 à 13, dans lequel le procédé comprend les étapes suivantes consistant à :
- interestérifier la au moins une graisse A en formant ainsi une graisse interestérifiée,
- soumettre ladite graisse interestérifiée à un procédé de fractionnement en une étape dans lequel ledit procédé de fractionnement en une étape comprend l'élimination d'au moins une fraction de stéarine, en formant ainsi une fraction d'oléine de la graisse interestérifiée, et
- mélanger ladite fraction d'oléine avec ladite au moins une huile liquide en formant ainsi la composition de graisse selon l'une quelconque des revendications 1 à 10.

15. Procédé selon l'une quelconque des revendications 11 à 13, dans lequel le procédé comprend les étapes suivantes consistant à :
- interestérifier la au moins une graisse A en formant ainsi une graisse interestérifiée,
- soumettre ladite graisse interestérifiée à un procédé de fractionnement en plusieurs étapes, de préférence un procédé de fractionnement en deux étapes, dans lequel ledit procédé de fractionnement en plusieurs étapes, de préférence un procédé de fractionnement en deux étapes, comprenant l'élimination d'au moins une fraction d'oléine et d'au moins une fraction de stéarine, formant ainsi une fraction intermédiaire de la graisse interestérifiée, et
- mélanger ladite fraction intermédiaire avec la au moins une huile liquide, en formant ainsi la composition de graisse selon l'une quelconque des revendications 1 à 10.

16. Produit comestible, dans lequel ledit produit comestible comprend :
- de 15 à 75 % en poids d'une composition de graisse, de préférence de 20 à 60 % en poids, de manière plus préférée de 25 à 40 % en poids, par rapport au poids total du produit comestible, la composition de graisse comprenant une composition de triglycérides, ladite composition de triglycérides comprenant par rapport au poids total de la composition de triglycérides :
a) moins de 50 pour cent en poids de triglycérides UUU,
b) des triglycérides SU2 et des triglycérides S2U, dans lequel la somme des quantités de SU2 et de S2U est d'au moins 50 % en poids,
c) des triglycérides SSU et des triglycérides SUS, dans lequel le rapport en poids de SSU/SUS est supérieur à 1,0,
d) et dans lequel le rapport en poids de SU2/U3 est de 0,6 à 1,3,
e) moins de 8 % en poids de triglycérides SSS,
f) et dans laquelle le rapport en poids de S3/ S2U est inférieur à 0,20, et
dans lequel la composition de graisse comprend, par rapport au poids total de la composition de graisse :
g) moins de 47 % en poids de résidus d'acide gras saturé présentant de 6 à 24 atomes de carbone (SAFA),
h) moins de 10 % en poids de résidus d'acides gras C12:0,
dans lequel U représente un résidu d'acide gras insaturé présentant de 16 à 24 atomes de carbone et S représente un résidu d'acide gras saturé présentant de 6 à 24 atomes de carbone, et
- de 25 à 85 % en poids d'au moins un composant choisi dans le groupe consistant du sucre, de la farine, de l'amidon, des ingrédients laitiers, de la poudre de cacao, de la poudre de café, des substituts de sucre, des édulcorants, des colorants naturels et synthétiques, des émulsifiants, des arômes, de préférence de 40 à 75 % en poids, de manière plus préférée de 50 à 70 % en poids, par rapport au poids total du produit comestible.

17. Produit comestible selon la revendication 16, dans lequel ledit produit comestible est choisi dans le groupe consistant en un produit de confiserie, en particulier une crème, un enrobage, une garniture, un produit de chocolat fourré, une pâte à tartiner non émulsifiée, un produit culinaire, une pâte ou un produit cuit au four, un ingrédient de graisse solide pour des produits alimentaires, du fromage à pâte molle, de préférence un produit de confiserie, de manière plus préférée une crème de confiserie ou une garniture.

18. Produit alimentaire comprenant le produit comestible selon l'une quelconque des revendications 16 et 17, le produit alimentaire étant choisi dans le groupe consistant en un produit de chocolat fourré, un biscuit revêtu d'une couche de crème dans lequel la couche de crème en tant que telle peut en outre être facultativement revêtue d'un enrobage, un biscuit présentant une couche de crème enserré entre deux couches de biscuit ou plus, des produits extrudés avec une garniture structurée intérieure, des produits cuits au four avec une garniture structurée, des produits de confiserie fourrés ou garnis, et des produits culinaires fourrés ou garnis.
